# EUROPEAN PATENT SPECIFICATION

(11) **EP 4 283 272 B1**
(45) Date of publication and mention of the grant of the patent: **20.11.2024**
(21) Application number: 23172036.8
(22) Date of filing: 08.05.2023
(51) Int. Cl.: G01L 9/00, B06B 1/06, G01H 11/08, G01N 29/02, G01N 29/24

(54) **PIEZOELECTRIC MICROMACHINED PRESSURE TRANSDUCER WITH HIGH SENSITIVITY AND RELATED MANUFACTURING PROCESS**
PIEZOELEKTRISCHER MIKROBEARBEITETER DRUCKWANDLER MIT HOHER EMPFINDLICHKEIT UND ZUGEHÖRIGES HERSTELLUNGSVERFAHREN
TRANSDUCTEUR DE PRESSION MICRO-USINÉ PIÉZOÉLECTRIQUE À HAUTE SENSIBILITÉ ET PROCÉDÉ DE FABRICATION ASSOCIÉ

(30) Priority: 27.05.2022 IT 202200011279
(43) Date of publication of application: 29.11.2023
(73) Proprietor: STMicroelectronics S.r.l., 20864 Agrate Brianza (MB) (IT)
(72) Inventor: GIUSTI, Domenico, 20867 Caponago (MB) (IT); QUAGLIA, Fabio, 27050 Pizzale (PV) (IT); FERRERA, Marco, 20863 Concorezzo (MB) (IT)
(74) Representative: Studio Torta S.p.A.

(56) References cited:
- EP-A1- 1 577 656
- WO-A1-2016/106153
- WO-A1-2017/218299
- US-A1- 2013 294 201
- US-A1- 2017 320 093
- US-A1- 2022 119 246
- WANG MINGJUN ET AL: "Enhancement of the Transmission of Piezoelectric Micromachined Ultrasonic Transducer With an Isolation Trench", JOURNAL OF MICROELECTROMECHANICAL SYSTEMS, IEEE SERVICE CENTER, US, vol. 25, no. 4, 1 August 2016 (2016-08-01), pages 691 - 700, XP011618147, ISSN: 1057-7157, [retrieved on 20160729], DOI: 10.1109/JMEMS.2016.2577038

## Description

The present invention relates to a piezoelectric micromachined pressure transducer having high sensitivity, as well as to the corresponding manufacturing process.

As is known, numerous pressure transducers are currently available, such as, for example, the so-called piezoelectric micromachined ultrasonic transducers (PMUT), which are devices of the category of micro-electromechanical systems (MEMS) which allow a pressure signal, such as, for example, an acoustic signal, to be transduced into an electrical signal, and vice versa. Furthermore, it is known that PMUT transducers typically include actuation piezoelectric structures, which in turn include regions of piezoelectric material; typically, this piezoelectric material is the so-called PZT.

As regards PZT, it is known that, assuming a PZT region having the shape of a parallelepiped and an orthogonal reference system XYZ, the value of the so-called parameter d₃₁ correlates the extent of the shortening along X of the PZT region with the extent of the electric field along Z. The value of the parameter d₃₁ of PZT is about ten times higher than the values of other possible piezoelectric materials, such as, for example, aluminum nitride AlN. For this reason, PZT is particularly suitable for the case in which the PMUT transducer mainly functions as a transducer of an electrical signal into an acoustic signal, that is, it functions as an acoustic source. However, PZT is also characterized by a particularly high value of the element ε₃₃ of the electrical permittivity tensor; this means that each actuation structure formed by PZT has a high electrical capacitance. Consequently, when the PMUT transducer is used in reception, that is to transduce an acoustic signal into an electrical signal, it occurs that, with the same mechanical stress induced by the acoustic signal, the actuation structure generates a lower voltage than what could occur in case of use of a piezoelectric material having a lower value of the element ε₃₃.

In practice, PMUT transducers including actuation structures formed by PZT are not very sensitive when used, for example, as pressure sensors. More generally, regardless of the type of piezoelectric material, the need is felt to have pressure transducers that have good sensitivity in reception, without compromising the effectiveness during the transmission step.

The aim of the present invention is therefore to provide a solution which allows this need to be satisfied at least in part. Prior art documents relevant to the invention are patent documents EP 1 577 656 A1, WO 2017/218299 A1, and US 2022/119246 A1.

According to the present invention, a pressure transducer and a manufacturing process are provided, as defined in the attached claims.

For a better understanding of the present invention, embodiments thereof are now described, purely by way of nonlimiting example, with reference to the attached drawings, wherein:
- Figure 1 schematically shows a perspective view of an array of transducer devices;
- Figure 2 schematically shows a perspective view of a transducer device;
- Figure 3 schematically shows a perspective view of a section of the transducer device shown in Figure 2, taken along section line III-III;
- Figure 4 schematically shows an enlarged perspective view of a portion of the transducer device shown in Figure 3;
- Figures 5A-5B schematically show simplified perspective views of the transducer device shown in Figure 2, in different operating conditions;
- Figure 6 shows an equivalent mechanical diagram of the transducer device shown in Figure 2, in rest conditions (top part) and in a condition other than the rest conditions (bottom part);
- Figure 7 shows trends over time of electrical signals;
- Figure 8 schematically shows a top view of a variant of the transducer device;
- Figures 9-11 and 14-15 schematically show sections of a transducer device during corresponding steps of a manufacturing process, referred to a same section line W-W, indicated in Figure 2;
- Figure 12 schematically shows a portion of a section of the transducer device during a corresponding step of the manufacturing process, referred to section line K-K, indicated in Figure 2; and
- Figure 13 schematically shows a perspective view of a portion of a section of the transducer device during a corresponding step of the manufacturing process, referred to section line K-K.

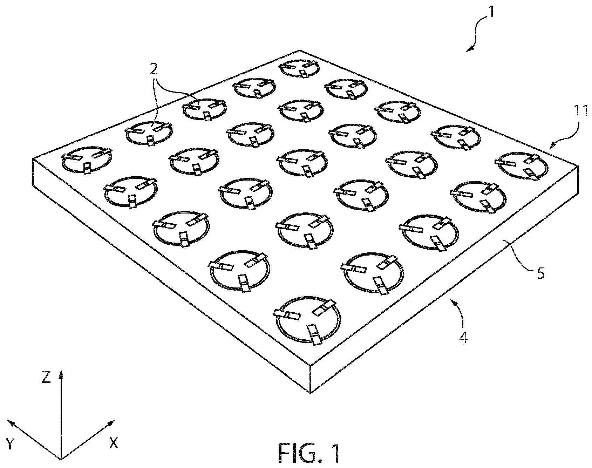

Figure 1 shows an array 1 of transducer devices 2, which are equal to each other, are formed in an integrated manner in a same semiconductor body 4 (formed for example by silicon) of a die 11 and are arranged according to one matrix scheme. Figure 1 also shows an orthogonal reference system XYZ.

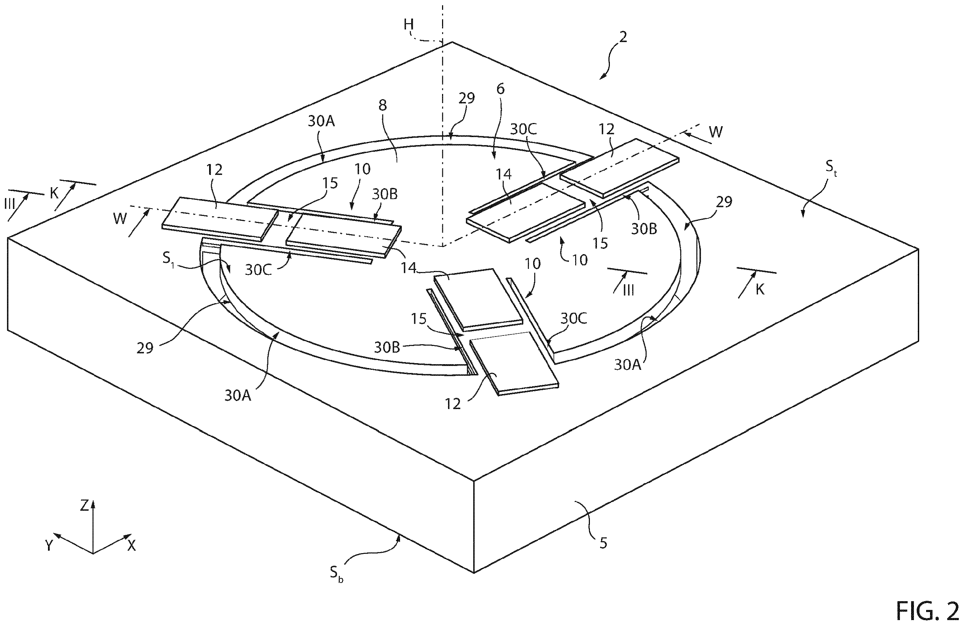

In particular, the semiconductor body 4 forms a fixed body 5, which is delimited at top and at bottom by, respectively, a top surface St and a bottom surface S_{b} (visible in Figure 2), which are parallel to the XY plane, and is shared between the transducer devices 2.

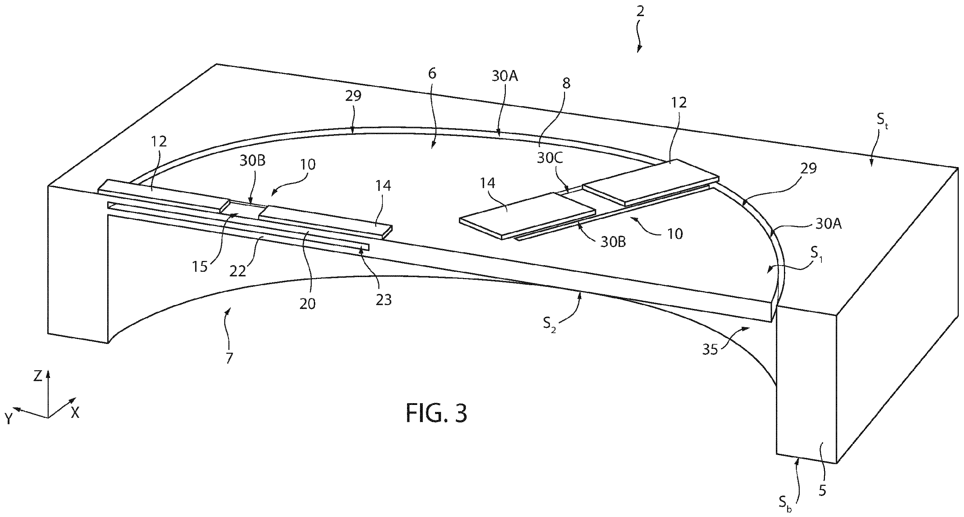

In addition, for each transducer device 2, the fixed body 5 laterally delimits a corresponding cavity 7, which is referred to as the main cavity 7 hereinafter. The main cavity 7, visible in Figure 3, is open downwardly and faces the bottom surface S_{b}; furthermore, without any loss of generality, the main cavity 7 is delimited by a side wall 35, formed by the fixed body 5 and having a (for example) cylindrical shape. In addition, each transducer device 2 comprises a corresponding transduction structure 6, which is suspended above the corresponding main cavity 7, as described in greater detail below. In this regard, since the transducer devices 2 are equal to each other, only one of them is described hereinafter, shown for example in Figures 2 and 3.

In detail, the transduction structure 6 comprises a movable region 8, formed by semiconductor material (for example, silicon), and three deformable structures, indicated with 10.

The deformable structures 10 are equal to each other and are arranged symmetrically with respect to an axis of symmetry H parallel to the Z axis. In addition, the deformable structures 10 have elongated shapes along respective elongation directions, which are arranged in such a way that pairs of adjacent elongation directions are angularly spaced by 120°. In other words, and without any loss of generality, the elongation directions are radial directions.

Each deformable structure 10 comprises a respective outer piezoelectric structure 12 and a respective inner piezoelectric structure 14, which are piezoelectric transduction structures, and a respective support structure 15. In rest conditions, the support structures 15 lie in a same plane parallel to the XY plane. Hereinafter, for the sake of brevity, only one deformable structure 10 is described.

In detail, the support structure 15 comprises a top beam 20 and a bottom beam 22, which, without any loss of generality, in rest conditions are equal to each other and have the shape of parallelepipeds with longitudinal axes parallel to the elongation direction of the deformable structure 10.

The top beam 20 is vertically (i.e., parallel to the Z axis) superimposed, at a distance, on the bottom beam 22. Furthermore, both the top beam 20 and the bottom beam 22 have a respective first end, which is integral with the fixed body 5, and in particular with the side wall 35, and a respective second end, which is integral with the movable region 8. In rest conditions, the top beams 20 lie in a respective plane parallel to the XY plane; the bottom beams 22 lie in a respective plane parallel to the XY plane.

Furthermore, the top beam 20 and the bottom beam 22 delimit, respectively at top and at bottom, a cavity 23, which is referred to as the secondary cavity 23 hereinafter. In rest conditions, the secondary cavity 23 has approximately the shape of a parallelepiped and, as explained below, is laterally open.

With regard to the movable region 8, it has a planar shape and is delimited at top by a first surface S₁, which in rest conditions is coplanar with the top surface St of the fixed body 5. Furthermore, the movable region 8 is delimited at bottom by a second surface S₂, which is parallel to the XY plane and faces the underlying main cavity 7.

In rest conditions the movable region 8 and the fixed body 5 laterally delimit three trench cavities 29, which, without any loss of generality, are equal to each other and extend vertically through the entire thickness of the movable region 8, so that they face the first and the second surfaces S₁, S₂. The trench cavities 29 are therefore open downwardly and upwardly; in particular, in rest conditions, the trench cavities 29 face downwardly corresponding portions of the main cavity 7.

In greater detail, considering any trench cavity 29, it comprises a respective peripheral portion 30A and a first and a second linear portion 30B, 30C, communicating with each other. The peripheral portion 30A has approximately the shape of a circumference portion, while the first and the second linear portions 30B, 30C have the shape of segments, are parallel to respective radial directions and extend from corresponding ends of the peripheral portion 30A; purely by way of example, the first linear portion 30B is arranged counterclockwise with respect to the second linear portion 30C. In practice, the peripheral portion 30A and the first and the second linear portions 30B, 30C laterally delimit a part of the movable region 8 which has approximately the shape of a corresponding circular sector, in top view. Furthermore, considering any pair formed by a first and a second trench cavity 29, the second trench cavity 29 being arranged, for example, counterclockwise with respect to the first trench cavity 29, it occurs that the first linear portion 30B of the first trench cavity 29 extends between the movable region 8 and a first side of a corresponding support structure 15, while the second linear portion 30C of the second trench cavity 29 extends between the movable region 8 and a second side of this corresponding support structure 15; furthermore, the aforementioned first and second linear portions 30B, 30C are parallel to the elongation direction of the deformable structure 10 whereto the aforementioned support structure 15 belongs. In addition, the top beam 20 and the bottom beam 22 of the support structure 15 laterally delimit the aforementioned first and second linear portions 30B, 30C, which extend on opposite sides of the support structure 15 and communicate laterally with the corresponding structure cavity 23, which, as previously mentioned, is laterally open on both sides.

Again with reference to any deformable structure 10, the respective outer piezoelectric structure 12 extends in part above the first end of the top beam 20 of the underlying support structure 15 and in part above the portion of fixed body 5 integral with the first end of this top beam 20. The respective inner piezoelectric structure 14 is laterally offset, along the elongation direction of the deformable structure 10, with respect to the outer piezoelectric structure 12; furthermore, the inner piezoelectric structure 14 extends in part above the second end of the top beam 20 of the underlying support structure 15 and in part above the portion of the movable region 8 integral with the second end of this top beam 20.

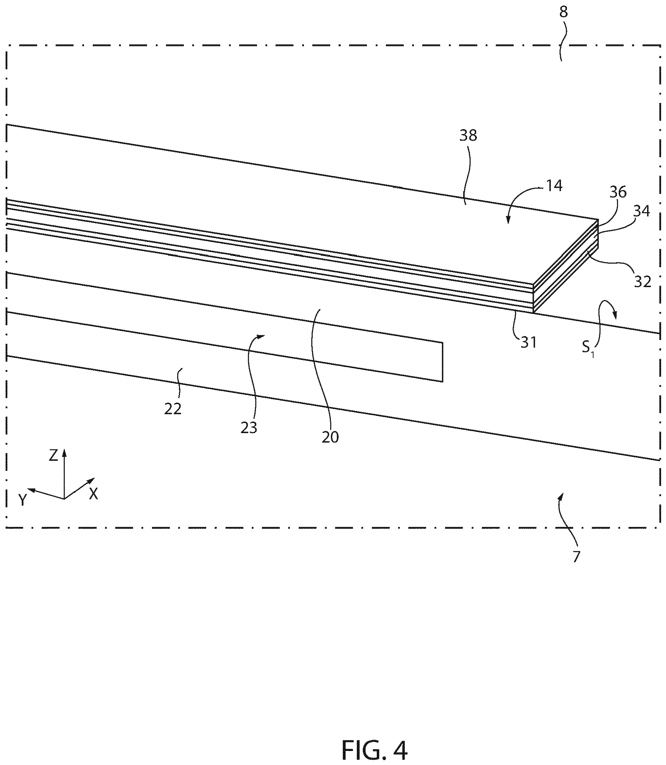

Without any loss of generality, the inner piezoelectric structure 14 and the outer piezoelectric structure 12 may be equal to each other. Furthermore, as shown in Figure 4 with reference to the inner piezoelectric structure 14 (but the same considerations also apply to the outer piezoelectric structure 12), the inner piezoelectric structure 14 may comprise a stack of regions, which includes: a dielectric region 31 of planar shape, formed for example by silicon oxide and arranged on the first surface S₁; a bottom electrode region 32 of planar shape, formed for example by platinum and arranged on the dielectric region 31, in direct contact; a piezoelectric region 34 of planar shape, formed for example by PZT and arranged on the bottom electrode region 32, wherewith it is in direct contact; a top electrode region 36 of planar shape, formed for example by platinum (or for example by TiW or IrO₂) and arranged on the piezoelectric region 34, wherewith it is in direct contact; and a passivation region 38 of planar shape, formed for example by silicon nitride (SiN) and arranged on the top electrode region 36, wherewith it is in direct contact.

In a per se known manner, the bottom electrode region 32 and the top electrode region 36 may be put into electrical contact (for example, through corresponding pads) with an outer circuitry (not shown and formed, for example, by a semiconductive die other than the semiconductive die 11) for applying a voltage between the bottom electrode region 32 and the top electrode region 36, so as to control the transducer device 2 in transmission, and/or to receive and process the voltage that is established between the bottom electrode region 32 and the top electrode region 36 in the presence of deformations of the deformable structure 10 caused by an acoustic signal, in case the transducer device 2 is controlled in reception, as explained below.

In greater detail, the piezoelectric region 34 has a thickness for example lower than 5um, that is it forms a so-called PZT thin film. Furthermore, in a per se known manner, when subject to voltage (more precisely, to an electric field), the piezoelectric region 34 shortens along the elongation direction of the corresponding deformable structure 10, with respect to the situation wherein it is not subject to voltage; this shortening induces a mechanical tension and a corresponding deformation of the inner piezoelectric structure 14, and therefore also of the corresponding deformable structure 10, as described hereinafter; the same considerations apply to the case in which the piezoelectric region belongs to an outer piezoelectric structure 12.

In detail, when a voltage is applied to the inner piezoelectric structures 14, that is when a voltage is applied between the bottom electrode regions 32 and the top electrode regions 36 of the inner piezoelectric structures 14, and assuming that no voltage is applied to the outer piezoelectric structures 12, the deformation of each inner piezoelectric structure 14 causes the top beam 20 and the bottom beam 22 of the underlying support structure 15 to bend downwards, in such a way that the second ends of the top beam 20 and of the bottom beam 22 lower, parallel to the Z axis, with respect to what occurs in rest conditions.

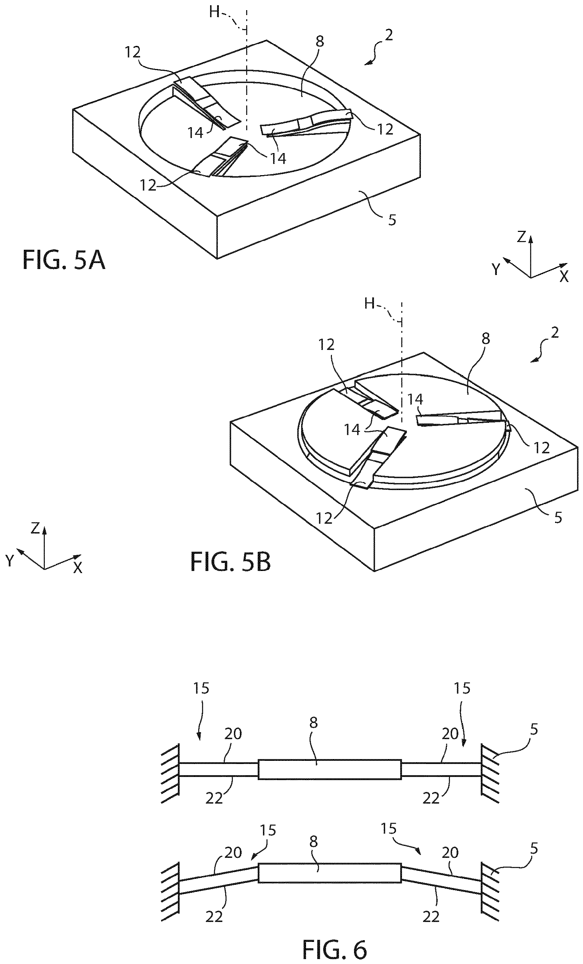

The lowering of the second ends of the top beams 20 and of the bottom beams 22 of the support structures 15 of the deformable structures 10 causes a downward translation, along the axis of symmetry H, of the movable region 8, as shown in Figure 5A, wherein for the sake of simplicity the secondary cavities 23 are not shown.

Similarly, when a voltage is applied to the outer piezoelectric structures 12, and assuming that no voltage is applied to the inner piezoelectric structures 14, the deformation of each outer piezoelectric structure 12 causes the top beam 20 and the bottom beam 22 of the underlying support structure 15 to bend upwards, in such a way that the second ends of the top beam 20 and of the bottom beam 22 rise, parallel to the Z axis, with respect to what occurs in rest conditions.

The raising of the second ends of the top beams 20 and of the bottom beams 22 of the support structures 15 of the deformable structures 10 causes a corresponding upward translation, along the axis of symmetry H, of the movable region 8, as shown in Figure 5B.

Both in case of upward translation and in case of downward translation, as a first approximation the movable region 8 is not subject to any rotation.

In greater detail, both in the case shown in Figure 5A and in the case shown in Figure 5B, the movable region 8 is subject to a translation parallel to the Z axis with respect to the rest conditions. In other words, the movable region 8 moves like a piston, as schematized in Figure 6, wherein the top part refers to the rest conditions, while the bottom part refers to the case of upward translation of the movable region 8 (for the sake of simplicity, the diagram of Figure 6 shows only two support structures 15). This is due to the fact that each support structure 15 comprises a pair of beams; in this manner, the movable region 8 is constrained to translate parallel to the Z axis, without being subject to rotations or deformations.

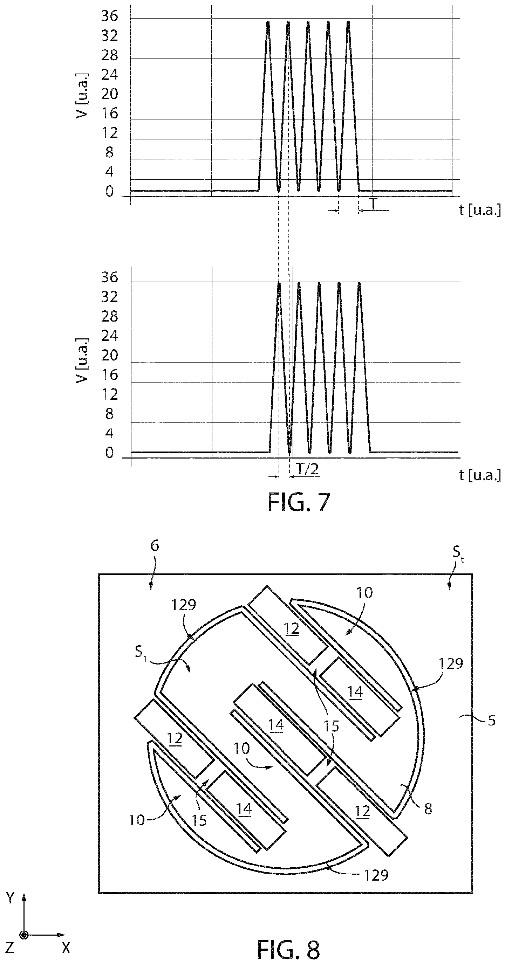

Operationally, it is therefore possible to control the outer piezoelectric structures 12 and the inner piezoelectric structures 14 so as to oscillate the movable region 8 around the rest position, so that this oscillation generates an acoustic signal. For example, it is possible to apply, to the outer piezoelectric structures 12 and to the inner piezoelectric structures 14, a first and, respectively, a second series of unipolar voltage pulses, each pulse having, for example, a sinusoidal shape, the first and the second series of pulses having a period T and being temporally shifted by T/2, as shown in Figure 7.

The piston movement of the movable region 8 also occurs when the transducer device 2 is used in reception, that is when the transducer device 2 is used to transduce a pressure signal (for example, an acoustic signal) which impinges on the transducer device 2 into corresponding electrical signals, which are generated by the outer piezoelectric structures 12 and by the inner piezoelectric structures 14 following the deformations of the respective support structures 15 (in particular, of the respective top beams 20) induced by the translation of the movable region 8, this translation being precisely caused by the acoustic signal.

More precisely, owing to the constraint mechanism described, the acoustic signal causes, regardless of the direction of origin, an oscillation of the movable region 8 along the axis of symmetry H, around the position assumed in rest conditions. The piston translation mechanism of the movable region 8 allows the dimensions of the piezoelectric regions 34, and therefore the capacitance value of the corresponding piezoelectric structures to be contained, since it optimizes the energy exchange between the acoustic signal and the movable region 8, and consequently maximizes the deformation of the piezoelectric regions, increasing the sensitivity. In fact, unlike what occurs for example in the (known) case wherein the piezoelectric structures are coupled to a suspended membrane, no portions of the movable region 8 exist which maintain, in the presence of the acoustic signal, the position assumed in rest conditions. Conversely, if the piezoelectric structures are coupled to a suspended membrane, and with the same area of the piezoelectric regions, the sensitivity is limited by the fact that, in the presence of the acoustic signal, only the central portion of the membrane is subject to a deformation, while the peripheral portion is not subject to any deformation, as it is fixed to the fixed body; in other words, the piezoelectric regions are not mechanically excited efficiently.

For example, it is possible to size the outer piezoelectric structures 12 and the inner piezoelectric structures 14 so that each has a capacitance equal to about 2pF. Furthermore, the transducer device 2 may reach sensitivity values of the order of mV per Pascal, much higher than what is currently obtainable in case of transducers wherein the piezoelectric structures are applied to membranes.

Different embodiments are also possible, wherein the number of deformable structures 10 is different from three and/or the deformable structures have a different arrangement; for example, Figure 8 shows an embodiment still including three deformable structures 10, which extend along corresponding elongation directions which are parallel to each other. The shapes of the trench cavities (here indicated with 129) modify accordingly.

Again with reference to the number of deformable structures 10, in general embodiments (not shown) are possible including only two deformable structures 10. Furthermore, embodiments (not shown) are possible wherein each support structure 15 comprises more than two beams.

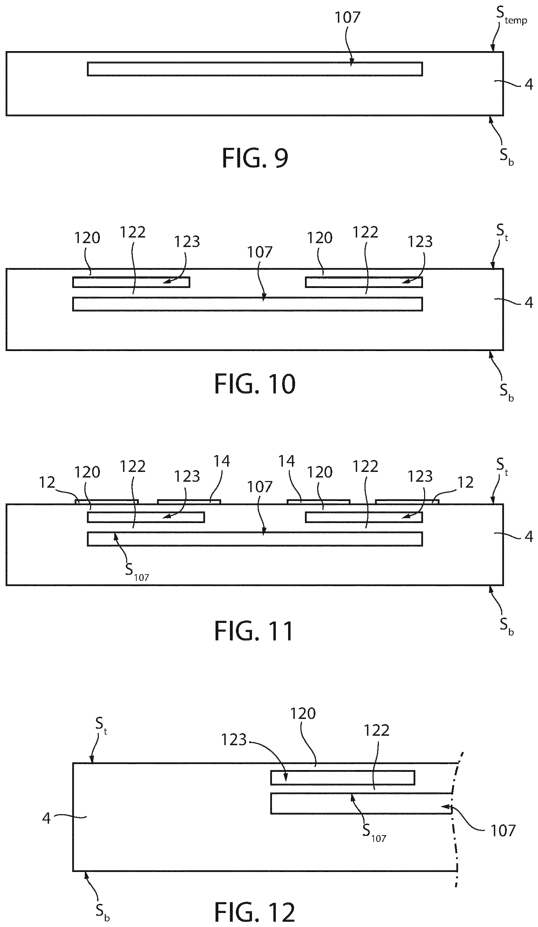

The array 1 of transducer devices 2 may be manufactured through the manufacturing process described hereinbelow, which for the sake of simplicity refers to the operations relating to the manufacturing of a single transducer device 2, of the type shown in Figures 2-4. Furthermore, the following Figures 9-11 and 14-15 refer to section line W-W shown by way of example in Figure 2.

Initially, as shown in Figure 9, the semiconductor body 4 is formed, so that it is delimited at top by a temporary surface Sₜₑₘₚ and includes a main buried cavity 107, intended to form the main cavity 7. The semiconductor body 4 is delimited at bottom by the bottom surface S_{b}.

The buried cavity 107 extends at a distance below the temporary surface Sₜₑₘₚ, that is, it is overlaid by a corresponding portion of the semiconductor body 4. For example, the formation of the main buried cavity 107 may occur in a manner known per se, and therefore not illustrated in detail, as explained in EP 1,577,656, that is by initially forming a plurality of laterally offset trenches in a semiconductive substrate and subsequently by performing an epitaxial growth, to close the trenches at top, and finally by performing a thermal treatment that causes the migration of semiconductor material and the formation of the main buried cavity 107.

Subsequently, as shown in Figure 10, secondary buried cavities 123 are formed, which are intended to form corresponding secondary cavities 23 and overlay the main buried cavity 107. To this end, the same method used to form the main buried cavity 107 may be performed, from the aforementioned portion of semiconductor body 4 which overlays the main buried cavity 107. This step of the manufacturing process may entail an increase in the thickness of the semiconductor body 4, which, once the formation of the secondary buried cavities 123 is completed, is delimited at top by the top surface St.

In practice, the secondary buried cavities 123 are substantially equal to each other, extend at a same height (measured along the Z axis) with respect to the underlying main buried cavity 107, that is, they are coplanar, and are laterally offset. Each secondary buried cavity 123 is therefore overlaid by a corresponding top portion 120 of semiconductor body 4, which extends between the top surface Sₜ and the underlying secondary buried cavity 123; furthermore, a corresponding portion of the semiconductor body 4, which is referred to as the bottom portion 122 of the semiconductor body 4, extends between each secondary buried cavity 123 and the underlying main buried cavity 107.

Then, as shown in Figure 11, in a per se known manner, a corresponding outer piezoelectric structure 12 and a corresponding inner piezoelectric structure 14 (shown schematically) are formed above each top portion 120 of the semiconductor body 4.

Subsequently, an etch (for example, of the dry type) is performed, from the top surface St, so that it selectively removes portions of semiconductor body 4 and forms the trench cavities 29, and therefore so that it forms the support structures 15 and the movable region 8.

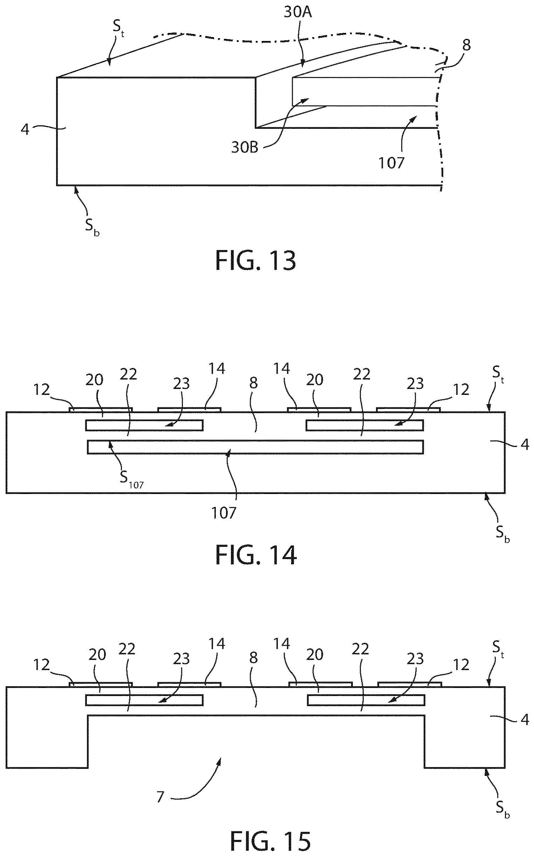

In particular, the effect of this etch is visible for example in Figures 12 and 13, which refer to section line K-K indicated by way of example in Figure 2 and show a portion of semiconductor body 4 respectively before and after the aforementioned etch.

In greater detail, referring to the intermediate surface S₁₀₇ to indicate the top surface of the main buried cavity 107, portions of the semiconductor body 4 are removed which extend vertically between the top surface St of the semiconductor body 4 and the intermediate surface S₁₀₇, to form the peripheral portions 30A of the trench cavities 29; furthermore, for each secondary buried cavity 123, parts of the corresponding top portion 120 of the semiconductor body 4 are removed which are laterally offset with respect to the corresponding outer piezoelectric structure 12 and the corresponding inner piezoelectric structure 14, and underlying parts of the corresponding bottom portion 122 of the semiconductor body 4; the remaining parts of the top portion 120 and of the bottom portion 122 of the semiconductor body 4 respectively form the corresponding top beam 20 and the corresponding bottom beam 22. The first linear portions 30B and the second linear portions 30C of the trench cavities 29 are thus formed, and therefore the support structures 15 and the movable region 8 are formed. This entails that each portion of secondary buried cavity 123 interposed between a corresponding top beam 20 and a corresponding bottom beam 20 forms a corresponding secondary cavity 23, as shown in Figure 14, which refers again, as does the following Figure 15, to section line W-W.

Then, as shown in Figure 15, an etch (for example, of dry type) is performed from the back, that is from the bottom surface S_{b}, so that it removes portions of the semiconductor body 4 arranged between the main buried cavity 107 and the bottom surface S_{b}. In this manner, the main buried cavity 107 is opened downwardly and forms the main cavity 7. The transducer device 2 is thus formed.

The advantages that the present solution affords are clear from the preceding description.

In particular, the present solution allows piezoelectric regions having a reduced area, and therefore a reduced capacitance, to be adopted, with consequent optimization of the sensitivity. This solution, while being particularly useful in case the piezoelectric regions are formed by PZT, due to the high value of the element ε_{33,} is also useful in case the piezoelectric material is different, even in case it is desired to optimize the sensitivity and contain the dimensions of the transducer.

Finally, it is clear that modifications and variations may be made to the transducer device and the manufacturing process described and illustrated herein without thereby departing from the scope of the present invention, as defined in the attached claims.

For example, each piezoelectric structure may comprise, instead of a single piezoelectric region, a stack formed by two or more piezoelectric regions, having intermediate conductive regions therebetween, in order to increase the force applied to the movable region during the transmission step.

Variants (not shown) are also possible wherein each deformable structure 10 comprises only one piezoelectric structure; in this case, the movable region 8 may only move below or above the position assumed in rest conditions.

## Claims

1. A micromachined pressure transducer comprising:
- a fixed body (5) of semiconductor material, which laterally delimits a main cavity (7);
- a transduction structure (6), which is suspended on the main cavity (7) and comprises at least a pair of deformable structures (10) and a movable region (8), which is formed by semiconductor material and is mechanically coupled to the fixed body (5) through the deformable structures (10);
**characterized in that** each deformable structure (10) comprises:
- a support structure (15) of semiconductor material, which includes a first and a second beam (20,22), each of which has ends respectively fixed to the fixed body (5) and to the movable region (8), the first beam (20) being superimposed, at a distance, on the second beam (22); and
- at least one piezoelectric transduction structure (12,14), mechanically coupled to the first beam (20);
and wherein the piezoelectric transduction structures (12,14) are electrically controllable so as to cause corresponding deformations of the respective support structures (15) and a consequent translation of the movable region (8) along a translation direction (H).

2. The transducer according to claim 1, wherein, in rest conditions, the first and the second beams (20) extend parallel to a reference plane (XY); and wherein the translation direction (H) is perpendicular to the reference plane (XY).

3. The transducer according to claim 2, wherein the movable region (8) has a planar shape, which is parallel to the reference plane (XY).

4. The transducer according to any of the preceding claims, wherein the first and the second beams (20,22) of each support structure (15) delimit at top and, respectively, at bottom a corresponding secondary cavity (23), which is laterally open.

5. The transducer according to any of the preceding claims, wherein the deformable structures (10) are in a number equal to three; and wherein the first and the second beams (20,22) of each support structure (15) are elongated parallel to a corresponding elongation direction; and wherein the elongation directions of the first and the second beams (20,22) of the deformable structures (10) are angularly spaced by 120°.

6. The transducer according to any of the preceding claims, wherein each deformable structure (10) comprises at least one of:
- a respective outer piezoelectric transduction structure (12), which in part overlays the fixed body (5); and
- a respective inner piezoelectric transduction structure (14), which in part overlays the movable region (8) .

7. The transducer according to any of the preceding claims, wherein each piezoelectric transduction structure (12,14) comprises a respective piezoelectric region (34) of PZT.

8. The transducer according to any of the preceding claims, wherein the piezoelectric transduction structures (12,14) are further configured to transduce into electrical signals the deformations of the corresponding support structures (15) caused by translations of the movable region (8) induced by an acoustic signal that impinges on the transducer (2).

9. An array of transducers (2), comprising a semiconductive die (11) and a plurality of transducers (2) according to any of the preceding claims, which are integrated in the semiconductive die (11).

10. A process for manufacturing a micromachined pressure transducer, comprising:
- from a semiconductor body (4), forming a main cavity (7) laterally surrounded by a fixed body (5) of semiconductor material;
- forming a transduction structure (6), which is suspended on the main cavity (7) and comprises at least a pair of deformable structures (10) and a movable region (8), which is formed by semiconductor material and is mechanically coupled to the fixed body (5) through the deformable structures (10);
**characterized in that** forming a transduction structure (6) comprises, for each deformable structure (10):
- forming a support structure (15) of semiconductor material, which includes a first and a second beam (20,22), each of which has ends respectively fixed to the fixed body (5) and to the movable region (8), the first beam (20) being superimposed, at a distance, on the second beam (22); and
- forming at least one piezoelectric transduction structure (12,14), mechanically coupled to the first beam (20) ;
and wherein the piezoelectric transduction structures (12,14) are electrically controllable so as to cause corresponding deformations of the respective support structures (15) and a consequent translation of the movable region (8) along a translation direction (H).

11. The manufacturing process according to claim 10, wherein the semiconductor body (4) is delimited by a front surface (Sₜ), said process further comprising:
- forming a main buried cavity (123) in the semiconductor body (4); and
- for each deformable structure (10), forming a corresponding secondary buried cavity (123), arranged between the front surface (St) of the semiconductor body (4) and the main buried cavity (123), so that a corresponding first portion (120) of semiconductor body (4) is interposed between the front surface (Sₜ) and the secondary buried cavity (123) and a corresponding second portion (122) of semiconductor body (4) is interposed between the secondary buried cavity (123) and the main buried cavity (107);
- for each deformable structure (10), forming said at least one piezoelectric transduction structure (12,14) on the corresponding first portion (120) of semiconductor body (4) ; and
- for each deformable structure (10), selectively removing parts of the corresponding first and second portions (120,22) of semiconductor body (4), so that the remaining parts of said first and second portions (120,122) of semiconductor body (4) form the corresponding first beam (20) and the corresponding second beam (22), respectively.

12. The manufacturing process according to claim 11, further comprising selectively removing portions of semiconductor body (4) interposed between the front surface (Sₜ) and the main buried cavity (107), so as to form a trench (30A) which laterally delimits the movable region (8).

13. The process according to claim 11 or 12, wherein the semiconductor body (4) is further delimited by a rear surface (S_{b}), said process further comprising selectively removing portions of the semiconductor body (4) interposed between the rear surface (S_{b}) and the main buried cavity (107), so as to form the main cavity (7).

## Patentansprüche

1. Mikrobearbeiteter Druckwandler, der Folgendes umfasst:
- einen festen Körper (5) aus Halbleitermaterial, der einen Haupthohlraum (7) seitlich begrenzt;
- eine Transduktionsstruktur (6), die an dem Haupthohlraum (7) aufgehängt ist und mindestens ein Paar verformbarer Strukturen (10) und einen beweglichen Bereich (8) umfasst, der aus Halbleitermaterial gebildet wird und durch die verformbaren Strukturen (10) mechanisch mit dem festen Körper (5) gekoppelt ist;
**dadurch gekennzeichnet, dass** jede verformbare Struktur (10) Folgendes umfasst:
- eine Stützstruktur (15) aus Halbleitermaterial, die einen ersten und einen zweiten Träger (20, 22) enthält, von denen jeder Enden aufweist, die jeweils am festen Körper (5) und am beweglichen Bereich (8) befestigt sind, wobei der erste Träger (20) in einem Abstand dem zweiten Träger (22) überlagert wird; und
- mindestens eine piezoelektrische Transduktionsstruktur (12, 14), die mechanisch mit dem ersten Träger (20) gekoppelt ist;
und wobei die piezoelektrischen Transduktionsstrukturen (12, 14) elektrisch steuerbar sind, um entsprechende Verformungen der jeweiligen Stützstrukturen (15) und eine daraus folgende Translation des beweglichen Bereichs (8) entlang einer Translationsrichtung (H) zu bewirken.

2. Wandler nach Anspruch 1, wobei sich der erste und der zweite Träger (20) in Ruhezuständen parallel zu einer Referenzebene (XY) erstrecken; und wobei die Translationsrichtung (H) senkrecht zur Referenzebene (XY) ist.

3. Wandler nach Anspruch 2, wobei der bewegliche Bereich (8) eine planare Form aufweist, die parallel zur Referenzebene (XY) verläuft.

4. Wandler nach einem der vorhergehenden Ansprüche, wobei der erste und der zweite Träger (20, 22) jeder Stützstruktur (15) oben bzw. unten einen entsprechenden sekundären Hohlraum (23) begrenzen, der seitlich offen ist.

5. Wandler nach einem der vorhergehenden Ansprüche, wobei die verformbaren Strukturen (10) in einer Anzahl gleich drei vorhanden sind; und wobei der erste und der zweite Träger (20, 22) jeder Stützstruktur (15) parallel zu einer entsprechenden Verlängerungsrichtung verlängert sind; und wobei die Verlängerungsrichtungen des ersten und des zweiten Trägers (20, 22) der verformbaren Strukturen (10) in einem Winkel von 120° beabstandet sind.

6. Wandler nach einem der vorhergehenden Ansprüche, wobei jede verformbare Struktur (10) mindestens eines von Folgendem umfasst:
- eine jeweilige äußere piezoelektrische Transduktionsstruktur (12), die teilweise den festen Körper (5) bedeckt; und
- eine jeweilige innere piezoelektrische Transduktionsstruktur (14), die teilweise den beweglichen Bereich (8) bedeckt.

7. Wandler nach einem der vorhergehenden Ansprüche, wobei jede piezoelektrische Transduktionsstruktur (12, 14) einen jeweiligen piezoelektrischen Bereich (34) aus PZT umfasst.

8. Wandler nach einem der vorhergehenden Ansprüche, wobei die piezoelektrischen Transduktionsstrukturen (12, 14) ferner dazu konfiguriert sind, die Verformungen der entsprechenden Stützstrukturen (15), die durch Translationen des beweglichen Bereichs (8) bewirkt werden, die durch ein akustisches Signal induziert werden, das auf den Wandler (2) trifft, in elektrische Signale umzuwandeln.

9. Anordnung von Wandlern (2), die einen halbleitenden Die (11) und eine Vielzahl von Wandlern (2) nach einem der vorhergehenden Ansprüche, die in den halbleitenden Die (11) integriert sind, umfasst.

10. Verfahren zum Herstellen eines mikrobearbeiteten Druckwandlers, das Folgendes umfasst:
- Bilden eines Haupthohlraums (7), der seitlich von einem festen Körper (5) aus Halbleitermaterial umgeben ist, aus einem Halbleiterkörper (4);
- Bilden einer Transduktionsstruktur (6), die an dem Haupthohlraum (7) aufgehängt ist und mindestens ein Paar verformbarer Strukturen (10) und einen beweglichen Bereich (8) umfasst, der aus Halbleitermaterial gebildet wird und durch die verformbaren Strukturen (10) mechanisch mit dem festen Körper (5) gekoppelt ist;
**dadurch gekennzeichnet, dass** das Bilden einer Transduktionsstruktur (6) für jede verformbare Struktur (10) Folgendes umfasst:
- Bilden einer Stützstruktur (15) aus Halbleitermaterial, die einen ersten und einen zweiten Träger (20, 22) enthält, von denen jeder Enden aufweist, die jeweils am festen Körper (5) und am beweglichen Bereich (8) befestigt sind, wobei der erste Träger (20) in einem Abstand dem zweiten Träger (22) überlagert wird; und
- Bilden mindestens einer piezoelektrischen Transduktionsstruktur (12, 14), die mechanisch mit dem ersten Träger (20) gekoppelt ist;
und wobei die piezoelektrischen Transduktionsstrukturen (12, 14) elektrisch steuerbar sind, um entsprechende Verformungen der jeweiligen Stützstrukturen (15) und eine daraus folgende Translation des beweglichen Bereichs (8) entlang einer Translationsrichtung (H) zu bewirken.

11. Herstellungsverfahren nach Anspruch 10, wobei der Halbleiterkörper (4) durch eine Vorderfläche (St) begrenzt wird, wobei das Verfahren ferner Folgendes umfasst:
- Bilden eines vergrabenen Haupthohlraums (123) im Halbleiterkörper (4); und
- für jede verformbare Struktur (10), Bilden eines entsprechenden vergrabenen sekundären Hohlraums (123), der zwischen der Vorderfläche (St) des Halbleiterkörpers (4) und dem vergrabenen Haupthohlraum (123) angeordneten ist, so dass ein entsprechender erster Abschnitt (120) des Halbleiterkörpers (4) zwischen der Vorderfläche (St) und dem vergrabenen sekundären Hohlraum (123) eingefügt ist und ein entsprechender zweiter Abschnitt (122) des Halbleiterkörpers (4) zwischen dem vergrabenen sekundären Hohlraum (123) und dem vergrabenen Haupthohlraum (107) eingefügt ist;
- für jede verformbare Struktur (10), Bilden der mindestens einen piezoelektrischen Transduktionsstruktur (12, 14) auf dem entsprechenden ersten Abschnitt (120) des Halbleiterkörpers (4); und
- für jede verformbare Struktur (10), selektives Entfernen von Teilen des entsprechenden ersten und des entsprechenden zweiten Abschnitts (120, 22) des Halbleiterkörpers (4), so dass die verbleibenden Teile des ersten und des zweiten Abschnitts (120, 122) des Halbleiterkörpers (4) den entsprechenden ersten Träger (20) bzw. den entsprechenden zweiten Träger (22) bilden.

12. Herstellungsverfahren nach Anspruch 11, das ferner das selektive Entfernen von Abschnitten des Halbleiterkörpers (4) umfasst, die zwischen der Vorderfläche (Sₜ) und dem vergrabenen Haupthohlraum (107) eingefügt sind, um so einen Graben (30A) zu bilden, der den beweglichen Bereich (8) seitlich begrenzt.

13. Verfahren nach Anspruch 11 oder 12, wobei der Halbleiterkörper (4) ferner durch eine Rückfläche (S_{b}) begrenzt ist, wobei das Verfahren ferner das selektive Entfernen von Abschnitten des Halbleiterkörpers (4) umfasst, die zwischen der Rückfläche (S_{b}) und dem vergrabenen Haupthohlraum (107) eingefügt sind, um so den Haupthohlraum (7) zu bilden.

## Revendications

1. Transducteur de pression micro-usiné comprenant :
un corps fixe (5) en matériau semi-conducteur, qui délimite latéralement une cavité principale (7) ;
une structure de transduction (6), qui est suspendue sur la cavité principale (7) et comprend au moins une paire de structures déformables (10) et une région mobile (8), qui est formée par un matériau semi-conducteur et est couplée mécaniquement au corps fixe (5) par les structures déformables (10) ;
**caractérisé en ce que** chaque structure déformable (10) comprend :
une structure de support (15) en matériau semi-conducteur, qui inclut une première et une seconde barre (20, 22), chacune comportant des extrémités fixées respectivement sur le corps fixe (5) et sur la région mobile (8), la première barre (20) étant superposée, à distance, sur la seconde barre (22) ; et
au moins une structure de transduction piézoélectrique (12, 14), couplée mécaniquement à la première barre (20) ;
et dans lequel les structures de transduction piézoélectriques (12, 14) peuvent être commandées électriquement de façon à provoquer des déformations correspondantes des structures de support (15) respectives et une translation qui en résulte de la région mobile (8) le long d'une direction de translation (H).

2. Transducteur selon la revendication 1, dans lequel, à l'état de repos, la première et la seconde barres (20) s'étendent parallèle à un plan de référence (XY) ; et dans lequel la direction de translation (H) est perpendiculaire au plan de référence (XY).

3. Transducteur selon la revendication 2, dans lequel la région mobile (8) a une forme plane, qui est parallèle au plan de référence (XY).

4. Transducteur selon l'une quelconque des revendications précédentes, dans lequel la première et la seconde barres (20, 22) de chaque structure de support (15) délimitent en haut et, respectivement, en bas une cavité secondaire (23) correspondante, qui est ouverte latéralement.

5. Transducteur selon l'une quelconque des revendications précédentes, dans lequel les structures déformables (10) sont en un nombre égal à trois ; et dans lequel la première et la seconde barres (20, 22) de chaque structure de support (15) sont allongées parallèlement à une direction d'allongement correspondante ; et dans lequel les directions d'allongement de la première et la seconde barres (20, 22) des structures déformables (10) sont espacées angulairement de 120°.

6. Transducteur selon l'une quelconque des revendications précédentes, dans lequel chaque structure déformable (10) comprend au moins une parmi :
une structure de transduction piézoélectrique (12) extérieure respective, qui recouvre en partie le corps fixe (5) ;
une structure de transduction piézoélectrique (14) intérieure respective, qui recouvre en partie la région mobile (8).

7. Transducteur selon l'une quelconque des revendications précédentes, dans lequel chaque structure de transduction piézoélectrique (12, 14) comprend une région piézoélectrique (34) respective en PZT.

8. Transducteur selon l'une quelconque des revendications précédentes, dans lequel les structures de transduction piézoélectriques (12, 14) sont en outre configurées pour convertir en signaux électriques les déformations des structures de support (15) correspondantes causées par des translations de la région mobile (8) induites par un signal acoustique qui impacte le transducteur (2).

9. Réseau de transducteurs (2), comprenant une puce semi-conductrice (11) et une pluralité de transducteurs (2) selon l'une quelconque des revendications précédentes, qui sont intégrés dans la puce semi-conductrice (11).

10. Processus de fabrication d'un transducteur de pression micro-usiné, comprenant :
à partir d'un corps semi-conducteur (4), de former une cavité principale (7) entourée latéralement par un corps fixe (5) en matériau semi-conducteur ;
de former une structure de transduction (6), qui est suspendue sur la cavité principale (7) et comprend au moins une paire de structures déformables (10) et une région mobile (8), qui est formée de matériau semi-conducteur et est couplée mécaniquement au corps fixe (5) par les structures déformables (10) ;
**caractérisé en ce que** former une structure de transduction (6) comprend, pour chaque structure déformable (10) :
de former une structure de support (15) en matériau semi-conducteur, qui inclut une première et une seconde barre (20, 22), chacune comportant des extrémités fixées respectivement sur le corps fixe (5) et sur la région mobile (8), la première barre (20) étant superposé, à distance, sur la seconde barre (22) ; et
de former au moins une structure de transduction piézoélectrique (12, 14), couplée mécaniquement à la première barre (20) ;
et dans lequel les structures de transduction piézoélectriques (12, 14) peuvent être commandées électriquement de façon à provoquer des déformations correspondantes des structures de support (15) respectives et une translation qui en résulte de la région mobile (8) le long d'une direction de translation (H).

11. Processus de fabrication selon la revendication 10, dans lequel le corps semi-conducteur (4) est délimité par une surface avant (Sₜ), ledit processus comprenant en outre :
de former une cavité enfouie principale (123) dans le corps semi-conducteur (4) ; et
pour chaque structure déformable (10), de former une cavité enfouie secondaire (123) correspondante, agencée entre la surface avant (Sₜ) du corps semi-conducteur (4) et la cavité enfouie principale (123), de telle manière qu'une première partie (120) correspondante du corps semi-conducteur (4) est intercalée entre la surface avant (Sₜ) et la cavité enfouie secondaire (123) et une seconde partie (122) correspondante de corps semi-conducteur (4) est intercalée entre la cavité enfouie secondaire (123) et la cavité enfouie principale (107) ;
pour chaque structure déformable (10), de former ladite au moins une structure de transduction piézoélectrique (12, 14) sur la première partie (120) correspondante du corps semi-conducteur (4) ; et
pour chaque structure déformable (10), d'enlever sélectivement des parties des première et seconde parties (120, 22) correspondantes du corps semi-conducteur (4), de telle manière que les parties restantes desdites première et seconde parties (120, 122) de corps semi-conducteur (4) forment la première barre (20) correspondante et la seconde barre (22) correspondante, respectivement.

12. Processus de fabrication selon la revendication 11, comprenant en outre d'enlever sélectivement des parties de corps semi-conducteur (4) intercalées entre la surface avant (Sₜ) et la cavité enfouie principale (107), de façon à former une tranchée (30A) qui délimite latéralement la région mobile (8).

13. Processus de fabrication selon la revendication 11 ou 12, dans lequel le corps semi-conducteur (4) est en outre délimité par une surface arrière (S_{b}), ledit processus comprenant en outre d'enlever sélectivement des parties du corps semi-conducteur (4) intercalées entre la surface arrière (S_{b}) et la cavité enfouie principale (107), de façon à former la cavité principale (7).
